# EUROPEAN PATENT APPLICATION

(11) **EP 4 643 972 A1**
(43) Date of publication of application: **05.11.2025**
(21) Application number: 24382468.7
(22) Date of filing: 29.04.2024
(51) Int. Cl.: B01D 29/64, B01D 35/02, B01D 35/16, B01D 35/26, D06F 39/10

(54) **HORIZONTAL ACTIVE FILTER FOR FILTERING EFFLUENT OF A WASHING MACHINE**

(71) Applicant: MANN+HUMMEL LIFE SCIENCES & ENVIRONMENT HOLDING SINGAPORE PTE. LTD., Singapore 139234 (SG)
(72) Inventor: LORENTE, Sonia, 71636 Ludwigsburg (DE); DEL RIO, Laura, 71636 Ludwigsburg (DE); ESTEBAN, Ignacio, 71636 Ludwigsburg (DE); GRACIA HERAS, Jaime, 71636 Ludwigsburg (DE); BIELSA, Raúl, 71636 Ludwigsburg (DE); MARZAL, Leopoldo, 71636 Ludwigsburg (DE)
(74) Representative: Mann + Hummel Intellectual Property

(57) **Abstract**

The invention refers to a filter assembly. The filter assembly comprises a housing with an inlet and an outlet; a rotor arranged inside the housing and being rotatable around a horizontal axis; a filter element having a curved filtration surface covered by filter medium, which separates a raw side associated with the inlet from a clean side associated with the outlet. The curved filtration surface extends over a first portion of the perimeter of the rotor. A collection chamber is provided adjacent to the curved filtration surface, the collection chamber extending over a second portion of the perimeter of the rotor and having an opening towards the rotor. There is also provided a washing machine comprising the disclosed filter assembly.

## Description

### Technical Field

The present invention refers to a filter assembly, for filtering effluent of a washing machine.

### Background Art

A filter assembly of this type is known from WO 2022/229646 A1.

When clothing is being washed, fibers and debris are released. Since clothing is often made with synthetic fibers, a certain amount of microplastics is generated during each washing cycle. Nowadays, microplastics emission is frequently considered as a severe ecological problem.

If the fibers and microplastics shall not be released into the environment, they need to be held back in order to be suitably disposed of. To this end, the use of filters is generally known, for instance from WO 2022/229646 A1, cited above.

WO 2022/229646 A1 discloses a cylindrical filter cage comprising a lattice structure and a porous filter medium secured to the internal surface of the lattice structure. For filtration operation, the filter cage is arranged in a filter chamber having an inlet connected to the radially inner side of the filter cage and an outlet in a cylindrical side wall of the filter chamber at an elevated position at a vertically uppermost part of the chamber. A movable member, which comprises four blades, is arranged inside the filter cage to be rotated by a motor. The blades each comprise a radially outermost filtration surface cleaning portion, which when in situ in the filter cage are close to or in contact with the filtration surface of the filter medium. The filter cage further comprises a user operable portion on the exterior of the filter cage that is adapted to be operated by a user's hand when the filter cage has been removed from the filter chamber. Rotation of the moveable member moves the surface cleaning portion of the blades against the filtration surface of the filter medium. This loosens filtered microparticles on the filtration surface so that the microparticles can fall out of an opening at a first axial end of the filter cage when a second axial end of the filter cage is held above the opening. Since the microparticles are trapped inside the filter cage, the filter medium needs frequent cleaning.

It is an object of the invention to provide for efficient filtration of effluent of washing machines, requiring little maintenance.

### Summary

This is achieved by a filter assembly according to claim 1, and a washing machine according to claim 15. Advantageous embodiments are given in the subclaims and the description.

In accordance with the invention, a filter assembly, for filtering effluent of a washing machine is provided. The filter assembly comprises a housing with an inlet and an outlet. The filter assembly further comprises a rotor arranged inside the housing and being rotatable around a horizontal axis. The filter assembly further comprises a filter element having a curved filtration surface covered by filter medium. The filter medium separates a raw side associated with the inlet from a clean side associated with the outlet. The curved filtration surface extends over a first portion of the perimeter of the rotor. A collection chamber is provided adjacent to the curved filtration surface, wherein the collection chamber extends over a second portion of the perimeter of the rotor and wherein the collection chamber has an opening towards the rotor.

During filtration operation, the rotor generally rotates in one same direction of rotation. The collection chamber is arranged behind the curved filtration surface with respect to the direction of rotation of the rotor.

A third portion of the perimeter of the rotor may extend from the second to the first portion with respect to the direction of rotation. The third portion of the perimeter of the rotor is generally not covered by the filter element, in particular neither by its filter medium nor by its collection chamber. In other words, the filter element typically does not enclose the rotor in circumferential direction. The inlet is preferably arranged in a position radially outside the third portion of the rotor's perimeter.

In operation, effluent containing microplastics and other debris such as fibers and dirt (altogether referred to as "particles") is fed into the raw side of the housing through the inlet. The rotating rotor carries effluent along the curved filtration surface towards the opening of the collection chamber. Part of the effluent passes through the filter medium of the curved filtration surface towards the clean side. Clean water is drained from the housing through the outlet. Microplastics and debris travel further towards the collection chamber, which they may enter through the opening, which faces the rotor. The fluid flow is slowed down in the collection chamber. Thus, the particles (microplastics and other debris) tend to sink downward inside the collection chamber. In particular, the collection chamber may provide a dead end towards the third portion of the perimeter. Since the particles accumulate inside the collection chamber, cleaning intervals of the filter element are prolonged. Water containing less particles exits the collection chamber through the opening. A vortex flow may be established in the collection chamber, further contributing to separate particles and water. The water exiting the collection chamber is carried by the rotor towards the third perimeter portion and mixes with effluent fed into the housing through the inlet.

The rotor (or agitator) generally comprises at least one blade or rib. Preferably, the rotor comprises at least two, preferably at least three, blades extending in axial direction (with respect to the rotor axis). Particularly preferably, the blades are oriented basically tangentially (with respect to the rotor axis). In other words, a circumferential width of the blades is at least 3-times, preferably at least 5-times, as large as a radial thickness of the blades. The blades may have a blunt front edge and a sharp rear edge, with respect to the direction of rotation. A cross section of the blades may have the shape of a hydrofoil designed to force water to the radial outside.

Generally, a gap is formed between the rotor and the curved filtration surface. I.e., the rotor does not contact the filter medium. A minimal distance between radially outer edges of the rotor, in particular the rotor blades, and the filter medium may be between 0.5 mm and 10 mm, preferably between 2 mm and 6 mm.

The blades or ribs rotating above the curved filtration surface cause pressure pulses and/or local variations in flow speed, which may contribute to detach microplastics and other debris accumulated on the filter medium. This contributes to reduce the need for cleaning of the filter medium. In particular, negative pressure at the rear edges of the blades may detach particles from the filter medium. The microplastics and other debris detached from the filter medium and re-entrained into the water may then be collected in the collection chamber.

It is understood, that the rotor axis extends basically horizontal in a regular position of use, but does not need to run exactly horizontal. During filtration operation, an angle between the rotor axis and the horizontal plane is generally at most 15°, preferably at most 10°, particularly preferably at most 5°. Indications of directions, such as radial or axial, generally refer to the rotor axis.

The curved filtration surface typically extends over at least 60°, preferably at least 90°, and at most 180°, preferably at most 120°, along the perimeter of the rotor (i.e. around the rotor axis).

The opening of the collection chamber may extend over at least 20°, preferably at least 30°, and/or at most 90°, preferably at most 60°, along the perimeter of the rotor.

Typically, an outer wall delimits the collection chamber in radially outward direction. Particles may eventually hit the outer wall and sink down. The impact of particles against a wall of the collection chamber contributes to separate the particles from the water flow.

The housing may comprise a housing body and optionally one or more covers, lids, or the like. This may facilitate manufacturing of the housing and mounting of the filter assembly.

Preferably, the collection chamber comprises an upper flap (or baffle). The flap defines an upper edge of the opening of the collection chamber. An upper area of the collection chamber may be arranged radially behind the flap. This design is particularly efficient in catching particles after they have traveled along the curved filtration surface. An inner surface of the flap may prevent or reduce the possibility of particles caught in the upper area from exiting the collection chamber. An outer surface of the flap may guide water and particles that are travelling along the curved filtration surface into the collection chamber. The flap may extend from the outer wall of the collection chamber. The flap may be shaped to complement a circumference of the rotor, which causes the flap to extend inwards into the collection chamber. This design may aid in retaining the particles in the collection chamber. The flap may comprise a first portion that extends from the outer wall towards the rotor. The flap may comprise a second portion that extends from the first portion and along a circumferential direction of the rotor.

A bottom face of the collection chamber is preferably arranged below a lower edge of the opening of the collection chamber. A protrusion may project upwards from the bottom face and define the lower edge of the opening. The protrusion may further define a rear end (in direction of rotation) of the curved filtration surface. Particles may accumulate on the countersunk bottom face. Lowering the bottom face with respect to the opening renders accumulated particles less susceptible for reentrance or to be re-entrained into the rotor area.

Particularly preferably, a further filtration surface covered by filter medium is provided at a bottom face of the collection chamber. Water may pass to the clean side from the collection chamber through the filter medium of the collection chamber. This design increases the available filtration area. Further, pressure buildup in the collection chamber is reduced, which in turn enhances the probability of particles entering the collection chamber through the opening and being kept inside the collection chamber. Additionally, draining of water through the bottom face of the collection chamber contributes to prevent fouling during periods of non-use. The latter is particularly relevant when the bottom face is countersunk behind a lower edge of the opening.

The collection chamber may comprise, at its bottom face, the further filtration surface covered by filter medium. Alternatively, the further filtration surface covered by filter medium may be an extension of the curved filtration surface. The further filtration surface may be angled away from the curvature of the curved filtration surface. The further filtration surface may cooperate with the outer wall of the collection chamber and form the bottom face of the collection chamber. The protrusion that defines the lower edge of the opening may project from an edge between the curved filtration surface and the further filtration surface. The protrusion may cooperate with the upper edge of the flap of the collection chamber to form the opening that faces the rotor.

Generally, both filter media of the curved filtration surface and the further filtration surface may be provided by one monolithic filter medium body. In particular, one common filter medium body may be over-molded to a main body of the filter element.

The filter element is preferably removable from the housing. This facilitates cleaning of the filter element. In particular, removal of particles, which have accumulated inside the collection chamber, is simplified.

The filter element may have an end face for sealing an open end of the housing. This allows for a simplified design of a filter assembly having a removable filter element. A seal may be arranged between the end face and the housing.

The removable filter element may be securable to the housing, for instance using screws or clips or snap hooks. A handle may be provided on the filter element, in particular at its end face.

Preferably, the filter element comprises a main body and a detachable hood, the hood delimiting the collection chamber. By removal of the hood, cleaning of the collection chamber is significantly facilitated. Further, manufacturing of the filter element may be simplified.

Particularly preferably, the upper flap and an outer wall of the collection chamber are provided at the detachable hood. This allows reducing undercuts, which is favorable, when the main body and the hood of the filter element shall be made as injection molded parts. Further, particles may stick to inner surfaces of the flap and outer wall. Cleaning of these inner surfaces is facilitated with the hood being removed from a main body.

At least one snap hook may be provided for attaching the hood to the main body. Alternatively or additionally, at least one finger may be provided at the hood for engaging a recess at the main body. An inverted design is also possible. Tool-free disassembly and reassembly of the hood may be enabled with these designs.

The inlet is preferably arranged in an upper area of the housing. The outlet is preferably arranged in a lower area of the housing.

Particularly preferably, the inlet and the outlet are arranged opposite to one another with respect to the rotor axis. In other words, a straight line connecting the inlet and the outlet may be a diagonal through the housing cross section. The straight connection line may cross the rotor axis. Maximizing the distance between inlet and outlet may enhance separation efficiency since the area of the curved filtration surface may be increased while maintaining a general circular flow pattern around the rotor axis, also on the clean side of the filter medium.

The filter assembly may further comprise a motor for rotating the rotor. The motor may be configured to rotate the rotor at a rotational speed of at least 200 rpm, preferably at least 300 rpm, particularly preferably at least 500 rpm. The motor is typically configured to rotate the rotor at a rotational speed of at most 1500 rpm.

Preferably, the rotor is rotatably supported at both axial ends of the housing. This avoids tumbling of the rotor and prevents unintentional contact of the rotor and the filter medium. In particular, at an open end of a housing body, a support body may be provided. With the support body and the housing body being separate parts, assembly is facilitated. Preferably, the filter element seals the open end of the housing body. Additionally or alternatively, the support body may seal the open end of the housing body.

The filter element may enclose the clean side. In other words, the filter element may define a cavity, which is delimited towards the rotor by the filter medium. Raw water may not enter the clean side without passing through the filter medium. Preferably, the filter element has a nozzle for fluidly connecting the clean side with the outlet. Besides the connection of nozzle and outlet, no internal sealing of the filter element against the housing is required, since the clean side is entirely inside the filter element. Less seals reduce the force to install the filter element. Further, malfunction due to a possibly misaligned or broken internal seal is avoided. It is understood, that an (external) seal (i.e. a seal towards the exterior) may be provided if the filter element closes an open end of the housing. When the clean side is inside the filter element, the external seal separates the raw side from the exterior.

The invention further relates to a washing machine comprising a filter assembly according to the invention, as described above. During operation of the washing machine, less particles, such as microplastics, are fed into a sewage system. The washing machine typically comprises a water inlet for receiving clean water, a washing drum, and a water outlet for discharging wastewater. Preferably, the filter assembly is fluidically arranged between the washing drum and the water outlet. In other words, effluent of the washing drum is directed through the filter assembly prior to being discharged via the water outlet.

The invention also relates to the use of a filter assembly according to the invention, as described above, for filtering effluent of a washing machine. Thereby, the ecological impact of operating the washing machine may be reduced. During use, the rotor generally rotates in a fixed direction of rotation.

### Brief Description of Drawings

Other advantages and features of the invention will be appreciated from the following description of embodiments of the invention with reference to the figures of the drawing, which show significant details, and from the claims. The individual features, as described above or explained below, may each be implemented individually or implemented together in any useful combination in variants of the invention.
Fig. 1 shows a washing machine according to the invention comprising a filter assembly according to the invention, in a schematic sketch.
Fig. 2 shows a filter assembly according to the invention in a schematic perspective view.
Fig. 3 shows a schematic exploded view of the filter assembly from Fig. 2.
Fig. 4 shows a schematic cross section of the filter assembly from Fig. 2.
Fig. 5 shows a schematic longitudinal section of the filter assembly from Fig. 2.
Fig. 6 shows a filter element of the filter assembly from Fig. 2 with a hood attached to a main body of the filter element, in a schematic perspective view.
Fig. 7 shows the filter element from Fig. 6 with the hood detached from the main body, in a schematic perspective view.

### Detailed Description

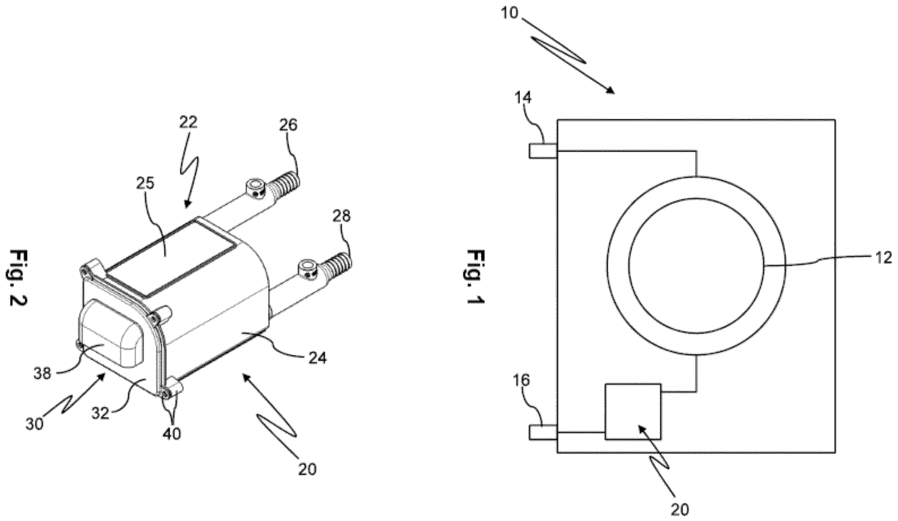

**Figure 1** shows a washing machine **10.** The washing machine 10 comprises a rotatable drum **12** for receiving clothing or the like to be washed. Fresh water is fed into the drum 12 via a water inlet **14** of the washing machine 10. Wastewater (effluent) from the drum 12 is discharged into a sewage system (not depicted) via a water outlet **16** of the washing machine 10. Fluidically between the drum 12 and the water outlet 16, a filter assembly **20** is arranged. The filter assembly 20 prevents debris, which may contain microplastics, from being fed into the sewage system. The filter assembly 20 may be arranged in a cavity (not shown) of the washing machine 10, such that the filter assembly 20, in particular its filter element, is accessible to a user.

**Figure 2** shows the filter assembly 20 in an assembled state. The filter assembly comprises a housing **22.** The housing 22 may comprise a housing body **24** and one or more lids **25**, for closing apertures in the housing body 24. An inlet **26** and an outlet **28** are formed at the housing 22. Here, connection sockets protrude from the main body 24 and define the inlet 26 and the outlet 28, respectively. Discharge from the drum 12 enters the inlet 26. The outlet 28 is connected to the water outlet 16. Clean water exits the filter assembly 20 from the outlet 28 and exits the washing machine 10 from the water outlet 16.

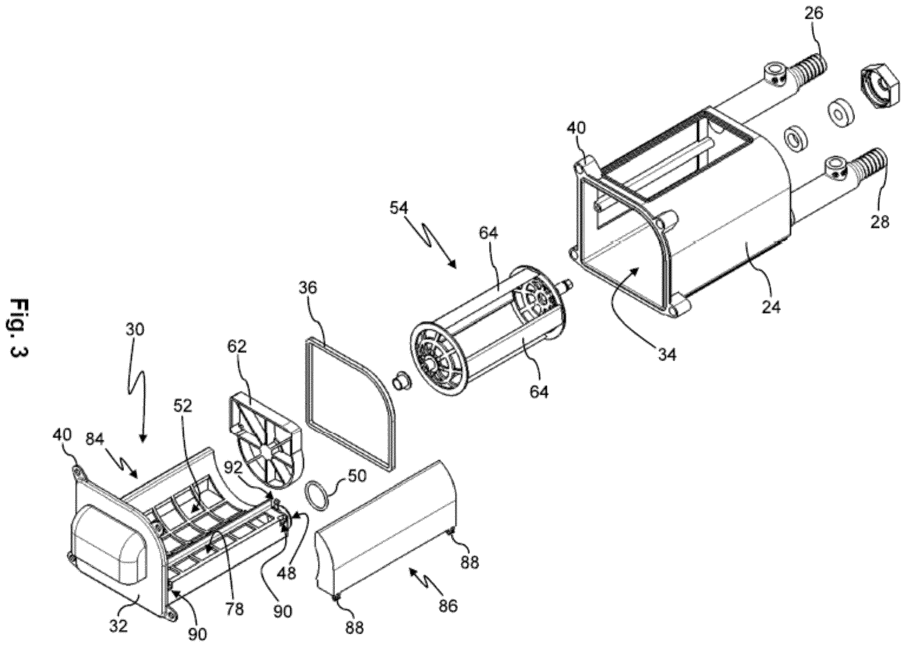

The filter assembly 20 further comprises a filter element **30.** For use, the filter element 30 is inserted into the housing 22, as depicted in Figure 2. An end face **32** of the filter element 30 may seal an open end **34** of the housing 22, see also **Figure 3****.** A seal **36** may be provided between the end face 32 and the main body 24 of housing 22. In this embodiment, a handle **38** is provided at the end face 32, to facilitate removal of the filter element 30 from the housing 22. For use, the filter element 30 is secured to the housing 22 via screws or the like at connection tabs **40.**

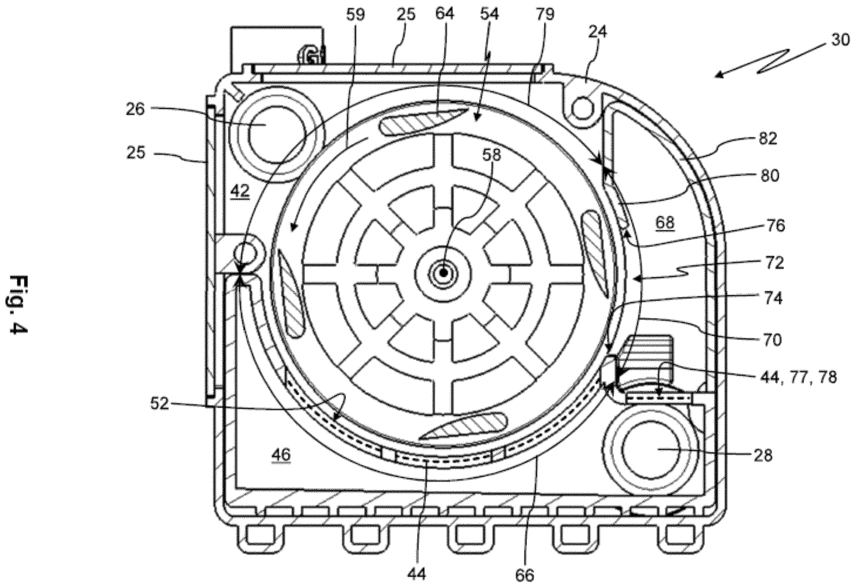

During use, effluent from the drum 12 (water containing particles such as microplastics), is directed to a raw side **42** inside the housing 22 through the inlet 26, see also **Figure 4****.** The filter element 30 has a filter medium **44** which separates the raw side 42 from a clean side **46.** Water may pass through the filter medium 44 to the clean side 46, while particles are held back on the raw side 42. Clean water is drained from the clean side 46 through the outlet 28.

In this embodiment, the clean side 46 is completely enclosed by the filter element 30. The filter element 30 has a nozzle **48**, which is connected to the outlet 28, see in particular Figure 3. A seal ring **50** may be arranged at the nozzle 48 for sealing against the housing 22 at the outlet 28. No other seal between the clean side 46 and the housing 22 is required in addition to the seal ring 50. It is noted, that the seal 36 between end face 32 and housing body 24 serves to prevent leakage from the raw side 42 into the environment, such as the cavity of the washing machine 10 in which the filter assembly 20 is arranged in.

The filter medium 44 covers a curved filtration surface **52**, which is provided with a lattice structure, see Figures 3 and 4. For guiding effluent towards and along filtration surface 52, a rotor **54** is provided inside the housing 22.

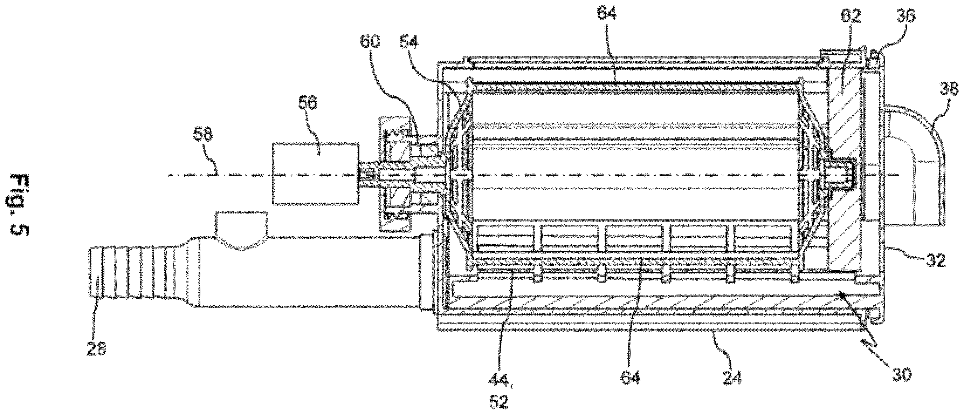

The rotor 54 is driven by a motor **56** and rotates around a horizontal axis **58,** see **Figure 5****.** The direction of rotation **59** is indicated in Figure 4.

At a first axial end, the rotor 54 is supported and sealed against a bearing flange **60** of the housing body 24, see Figure 5. At a second axial end, the rotor 54 is supported in a support body **62**, which is in turn received inside the housing body 24 near its open end 34.

The rotor 54 has several, here four, blades **64**, which extend in axial and basically tangential direction, cf. Figures 3 to 5. As is appreciated in particular from Figure 4, the blades are designed as hydrofoils, which force water in the radially outside direction.

The curved filtration surface 52 partially surrounds the rotor 54. In other words, the curved filtration surface 52 with filter medium 44 covers a first portion **66** of the perimeter of the rotor 54, see Figures 3 and 4.

In use, the blades 64 travel along the curved filtration surface 52 without touching the filter medium 44. A gap of e.g. 4 mm may be provided between the filter medium 44 and the blades 64.

A collection chamber **68** is arranged behind the curved filtration surface 52 with respect to the direction of rotation 59 of rotor 54, see in particular Figure 4. The collection chamber 68 covers a second portion **70** of the perimeter of the rotor 54.

The collection chamber 68 is open towards the rotor 54. In other words, the collection chamber 68 is fluidically arranged on the raw side 42. An opening **72** of the collection chamber 68 extends from a lower edge **74** to an upper edge **76.**

The lower edge 74 is provided at a rear end of the curved filtration surface 52. A bottom face **77** of the collection chamber 68 is recessed with respect to the lower edge 74. The bottom face 77 is provided with a lattice structure (see Figure 3) covered by filtration medium 44 (see Figure 4). Thus, the bottom face 77 of the collection chamber 68 provides a further filtration surface **78.** Water may pass from the collection chamber 68 through the further filtration surface 78 to the clean side 46, while particles are held back in the collection chamber 68 by the filter medium 44.

A third portion **79** of the perimeter of the rotor 54 spans from the rear end of the collection chamber 68 to the front end of the curved filtration surface 52. Note that the terms "front" and "rear" generally refer to the direction of rotation 59. In this embodiment, the filter element 39 does not engage into the third perimeter portion 79.

The inlet 26 may be arranged in a radial outer position in the rear part of the third perimeter portion 79, i.e. closer to the curved filtration surface 52 than to the collection chamber 68. The outlet 28 is preferably arranged in a rear part of the clean side 46. Here, the inlet 26 and the outlet 28 are opposite to one another with respect to the rotation axis 58.

In this embodiment, the filter medium 44 is one monolithic body that covers both the curved filtration surface 52 and the further filtration surface 78. Alternatively, separate filter medium bodies may be provided for the curved and further filtration surfaces 52, 78 (nor depicted in detail). Even several filter medium bodies might be provided per filtration surface 52, 78.

The upper edge 76 of the opening 72 is defined by a flap **80**, see in particular Figure 4. The flap 80 may extend in basically circumferential direction of rotor 54. A dead end of the collection chamber 68 may be provided above the upper edge 76 and on an inner surface of the flap 80 facing the inside of the collection chamber 68.

Towards the radially outside, the collection chamber 68 is delimited by an outer wall **82.**

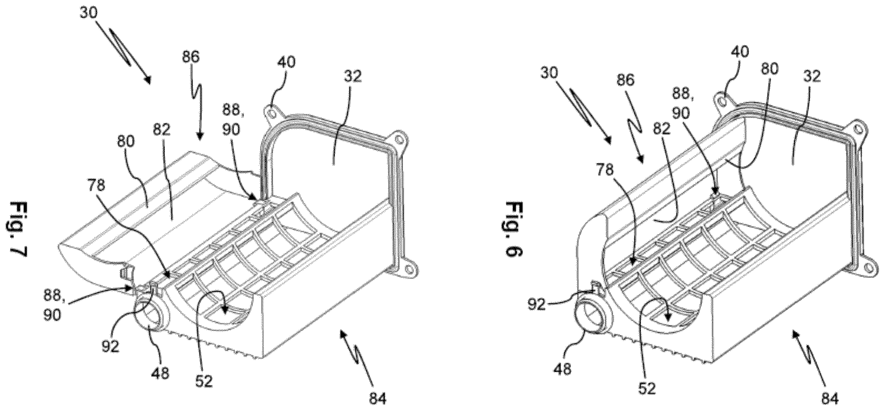

In this embodiment, the filter element 30 comprises a main body **84** and a detachable hood **86**, see **Figures 6** and **7****.** Flap 80 and outer wall 82 are provided at the hood 86. The filtration surfaces 52, 78 are provided at the main body 84. The main body 84 further comprises the end face 32 and the nozzle 48. In particular, the inner volume of main body 84 corresponds to the clean side 46.

The hood 86 has protruding fingers **88**, which - in the assembled state - engage recesses **90** of the main body 84, see also Figure 3. A snap hook **92**, see Figures 6 and 7, serves to prevent unintentional disengagement of main body 84 and hood 86.

For filtration operation, the hood 86 is attached to the main body 84 and the filter element 30 is installed in the housing 22. After some period of filtration operation, cleaning may be required. Since the particles accumulate in the collection chamber 68 rather than on the curved filtration surfaces 52, the operation time without cleaning is advantageously longer than in conventional filter designs. For cleaning, the filter element 30 is removed from housing 22 (after loosening fixture at tabs 40). Then, the hood 86 is detached from the main body 84. Thereto, the snap hook 92 is disengaged, so hood 86 may be swung out, as depicted in Figure 7, or completely removed. This facilitates cleaning of the inner surfaces of flap 80 and outer wall 82. In particular, access to the upper dead end area between flap 80 and outer wall 82 is improved.

In summary, the invention refers to a filter assembly for filtering effluent of a washing machine. Effluent (water containing particles) is fed into a raw side, where a rotor rotating about a horizontal axis causes a basically circular flow pattern. The effluent is guided from an inlet towards a curved filtration surface, which covers a first part of the rotor's circumference. Part of the water may pass through the filtration surface into a clean side, while the particles are blocked from passing. A collection chamber is provided behind the curved filtration surface, with respect to the direction of rotation. An opening extending along a second part of the rotor's circumference allows for entrance of water and particles into the collection chamber. A further filtration surface may allow water to pass from the collection chamber to the clean side, while particles are held back in the collection chamber. For cleaning, the filter element may be removed from a housing. Preferably, a hood, which delimits the collection chamber, may be removed from a main body of the filter element. A filter medium, e.g. a filter mesh, may be embedded in the main body.

### Reference Numbers

Washing machine **10**
Drum **12**
Water inlet
Water outlet **16**
Filter assembly **20**
Housing **22**
Housing body **24**
Lid **25**
Inlet **26**
Outlet **28**
Filter element **30**
End face **32**
Open end **34**
Seal **36**
Handle **38**
Connection tabs **40**
Raw side **42**
Filter medium **44**
Clean side **46**
Nozzle **48**
Seal ring **50**
Curved filtration surface **52**
Rotor **54**
Motor **56**
Axis **58**
Direction of rotation **59**
Bearing flange **60**
Support body **62**
Blades **64**
First perimeter portion **66**
Collection chamber **68**
Second perimeter portion **70**
Opening **72**
Lower edge **74**
Upper edge **76**
Bottom face **77**
Further filtration surface **78**
Third perimeter portion **79**
Flap **80**
Outer wall **82**
Main body **84**
Hood **86**
Fingers **88**
Recesses **90**
Snap hook **92**

## Claims

1. Filter assembly (20), for filtering effluent of a washing machine (10), the filter assembly (20) comprising:
- a housing (22) with an inlet (26) and an outlet (28);
- a rotor (54) arranged inside the housing (22) and being rotatable around a horizontal axis (58);
- a filter element (30) having a curved filtration surface (52) covered by filter medium (44), which separates a raw side (42) associated with the inlet (26) from a clean side (46) associated with the outlet (28);
wherein the curved filtration surface (52) extends over a first portion (66) of the perimeter of the rotor (54); and
wherein a collection chamber (68) is provided adjacent to the curved filtration surface (52), the collection chamber (68) extending over a second portion (70) of the perimeter of the rotor (54) and having an opening (72) towards the rotor (54).

2. The filter assembly (20) according to claim 1, wherein the collection chamber (68) comprises an upper flap (80) which defines an upper edge (76) of the opening (72) of the collection chamber (68).

3. The filter assembly (20) according to any one of claims 1 or 2, wherein a bottom face (77) of the collection chamber (68) is arranged below a lower edge (74) of the opening (72) of the collection chamber (68).

4. The filter assembly (20) according to any one of the preceding claims, wherein a further filtration surface (78) covered by filter medium (44) is provided at a bottom face (77) of the collection chamber (68).

5. The filter assembly (20) according to any one of the preceding claims, wherein the filter element (30) is removable from the housing (22).

6. The filter element (30) according to claim 5, wherein the filter element (30) has an end face (32) for sealing an open end (34) of the housing (22).

7. The filter assembly (20) according to any one of the preceding claims, wherein the filter element (30) comprises a main body (84) and a detachable hood (86), the hood (86) delimiting the collection chamber (68).

8. The filter assembly (20) according to claim 7, wherein an upper flap (80) and an outer wall (82) of the collection chamber (68) are provided at the detachable hood (86).

9. The filter assembly (20) according to any one of claims 7 or 8, wherein at least one snap hook (92) is provided for attaching the hood (86) to the main body (84) and/or wherein at least one finger (88) is provided at the hood (86) for engaging a recess (90) at the main body (84).

10. The filter assembly (20) according to any one of the preceding claims, wherein the inlet (26) and the outlet (28) are arranged opposite to one another with respect to the rotor axis (58).

11. The filter assembly (20) according to any one of the preceding claims, further comprising a motor (56) for rotating the rotor (54); and/or wherein the rotor (54) is rotatably supported at both axial ends of the housing (22), in particular wherein at an open end (34) of a housing body (24), a support body (62) is provided.

12. The filter assembly (20) according to any one of the preceding claims, wherein the filter element (30) encloses the clean side (46), preferably wherein the filter element (30) has a nozzle (48) for fluidly connecting the clean side (46) with the outlet (28).

13. The filter assembly (20) according to any one of the preceding claims, wherein the rotor (54) comprises at least two, preferably at least three, blades (64) extending in axial and/or tangential direction.

14. The filter assembly (20) according to any one of the preceding claims, wherein a minimal distance between the rotor (54), in particular the rotor blades (64), and the filter medium (44) is between 0,5 mm and 10 mm, preferably between 2 mm and 6 mm.

15. Washing machine (10) comprising a filter assembly (20) according to any one of the preceding claims.
